# EUROPÄISCHE PATENTSCHRIFT

(11) **EP 4 497 988 B1**
(45) Veröffentlichungstag und Bekanntmachung des Hinweises auf die Patenterteilung: **02.09.2026**
(21) Anmeldenummer: 23187426.4
(22) Anmeldetag: 25.07.2023
(51) Int. Cl.: F17C 3/08

(54) **BEHÄLTER ZUR AUFNAHME EINES KRYOFLUIDS**
CONTAINER FOR RECEIVING A CRYOFLUID
RÉCIPIENT DESTINÉ À RECEVOIR UN FLUIDE CRYOGÉNIQUE

(43) Veröffentlichungstag der Anmeldung: 29.01.2025
(73) Patentinhaber: SAG Group B.V., 2222 AK Katwijk (NL)
(72) Erfinder: GATTRINGER, Bastian, 5651 Lend (AT); EIBÖCK, Martin, 5760 Saalfelden (AT)
(74) Vertreter: Weiser Voith Gugler Patentanwälte Partnerschaft

(56) Entgegenhaltungen:
- CN-A- 104 235 600
- IT-A1- 202100 014 975
- JP-U- S5 627 500
- US-A- 3 446 387
- US-A1- 2013 187 374

## Beschreibung

Die vorliegende Erfindung betrifft einen Behälter zur Aufnahme eines Kryofluids, insbesondere kryogenen Wasserstoffs, mit einem Außenbehälter und einem darin über eine Stützstruktur beabstandet angeordneten Innenbehälter, wobei der Zwischenraum zwischen Außen- und Innenbehälter zwecks Wärmeisolierung evakuierbar ist, und wobei zumindest eine mit dem Innenbehälter in Verbindung stehende Leitung die Wandung des Außenbehälters durchsetzt.

Um den Energiegehalt von Energieträgern, welche unter Normalbedingungen gasförmig sind, zu erhöhen, werden diese für Transport- und Lagerungszwecke entweder komprimiert und in Druckbehältern gespeichert oder auf Tieftemperatur abgekühlt und dabei zu einem Kryofluid zumindest teilverflüssigt und in temperaturisolierten Behältern gespeichert. Zum Antrieb von Fahrzeugen werden **z.B.** verflüssigter Wasserstoff (LH2) oder verflüssigtes Erdgas (liquefied natural gas, LNG) als Kryofluide mit hoher Energiedichte gespeichert, um hinterher zum Betrieb von im wesentlichen herkömmlichen Verbrennungskraftmaschinen oder Brennstoffzellen der Fahrzeuge genutzt zu werden.

Aufgrund der extrem geringen Temperaturen solcher Kryofluide, **z.B.** etwa -252 °C im Falle von flüssigem Wasserstoff oder etwa -161 °C im Falle von LNG, stellt bei doppelwandigen Behältern der eingangs genannten Art jede Leitung, die vom Innenbehälter durch den wärmeisolierenden Zwischenraum und die Wandung des Außenbehälters hindurch geht, eine Wärmebrücke dar, welche die Aufrechterhaltung der Tiefsttemperatur im Innenbehälter beeinträchtigt. In der Praxis sind sogar mehrere solcher Leitungen erforderlich, wie Befüll- und Entnahmeleitungen für das Kryofluid, Entgasungs- bzw. Druckentlastungsleitungen, Vorlaufund Rücklaufleitungen für einen im Innenbehälter angeordneten Wärmetauscher, Hohlleitungen als Kabelschächte zum Anschluss von Druck-, Temperatur- und Füllstandsensoren im Innenbehälter usw. Jede dieser Leitungen stellt eine die thermische Isolierung des Innenbehälters beeinträchtigende Wärmebrücke dar. Aus JP S56 27500 U ist bekannt, solche Leitungen, wo sie die Wandung des Außenbehälters durchsetzen, über flexible Verbindungselemente, z.B. Faltenbalgmanschetten, in den Öffnungen der Außenbehälter zu montieren.

Die Erfindung setzt sich zum Ziel, einen Behälter für Kryofluide zu schaffen, der eine verbesserte Wärmeisolierung des Innenbehälters bietet.

Dieses Ziel wird bei einem Behälter der einleitend genannten Art erreicht, bei welchem die Wandung des Außenbehälters eine Öffnung hat, deren lichte Weite größer als der Außendurchmesser der Leitung ist und die von der Leitung durchsetzt ist, wobei die Leitung über eine Faltenbalgmanschette in der Öffnung vakuumdicht montiert ist. Dadurch wird die von der Außenwanddurchdringung der Leitung verursachte Wärmeleitstrecke verlängert, sodass der Innenbehälter besser vom Behälteräußeren thermisch entkoppelt ist. Besonders vorteilhaft ist dies bei Behältern und Leitungen aus Metall, z.B. Edelstahl oder Aluminium, wie es für den druckdichten Transport von Wasserstoff oder LNG verwendet wird. Die hohe Wärmeleitfähigkeit von Metall und insbesondere Aluminium aber auch Edelstahl wird durch die Faltenbalgmanschette, welche die thermisch wirksame Länge der Wanddurchdringung der Leitung vervielfacht, signifikant gemildert.

Die Faltenbalgmanschette ist etwa rohrförmig, umgibt die Leitung mit Abstand und ist an einem Ende verengt, wobei das verengte Ende vakuumdicht mit einem Außenumfang der Leitung und das gegenüberliegende Ende vakuumdicht mit dem Rand der Öffnung verbunden ist. Eine solche rohrförmige Faltenbalgmanschette verlängert die thermisch wirksame Länge des Kontaktbereichs zwischen der Leitung und dem Außenbehälter in besonders hohem Maße.

Innen- und Außenbehälter haben jeweils einen zylinderförmigen Mantel mit diesen beidseitig verschließenden Böden, wobei die Öffnung in einem Boden des Außenbehälters liegt. Die Erfindung zeichnet sich dadurch aus, dass die Faltenbalgmanschette in den Zwischenraum zwischen diesem Boden und dem benachbarten Boden des Innenbehälters ragt. Die Faltenbalgmanschette vergrößert dadurch nicht die Außenlänge des Behälters, sondern nützt den Raum zwischen den Böden. Optional kann der Boden des Außenbehälters im Bereich der Öffnung eine Ausbuchtung nach außen haben, wodurch eine besonders lange und damit thermisch besonders gut entkoppelnde Faltenbalgmanschette zwischen den Böden Platz findet.

Die Faltenbalgmanschette kann aus jedem geeigneten vakuumtauglichen Material gefertigt sein. Besonders günstig ist es, wenn die Faltenbalgmanschette aus Metall gefertigt ist, bevorzugt aus Edelstahl oder Aluminium, was ihr Temperaturfestigkeit und mechanische Stabilität verleiht.

Die Erfindung wird nachstehend anhand von in den beigeschlossenen Zeichnungen dargestellten Ausführungsbeispielen näher erläutert. In den Zeichnungen zeigt:
Fig. 1 den Behälter der Erfindung in einem Längsschnitt;
Fig. 2 den Behälter von Fig. 1 in einer Schrägansicht von vorne bei abgenommenem Außenboden;
Fig. 3 eine Variante des Behälters der Fig. 1 und 2 in einem Längsschnitt;
Fig. 4 das Detail IV von Fig. 3 in einer teilweise geschnittenen Perspektivansicht; und
Fig. 5 einen ausschnittsweisen Längsschnitt durch eine der Faltenbalgmanschetten des Behälters der Erfindung.

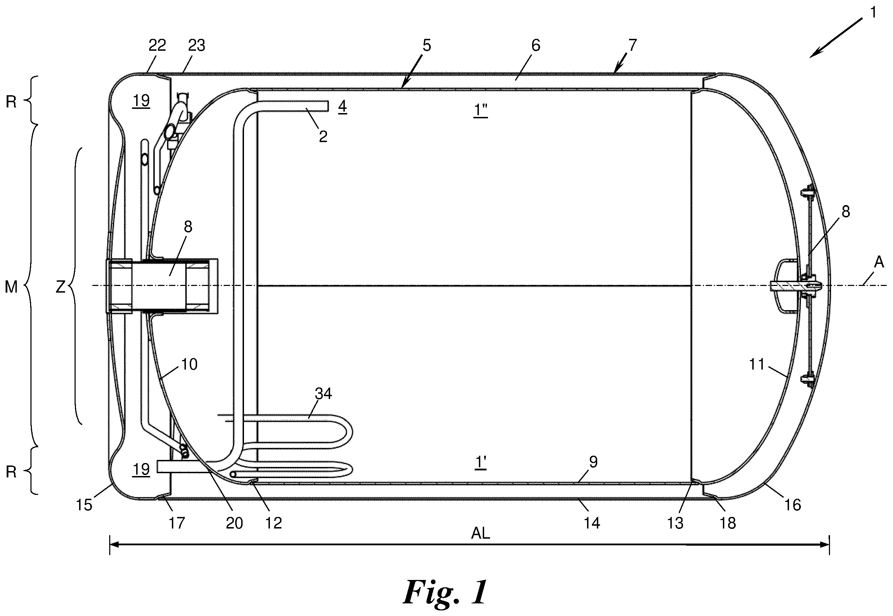

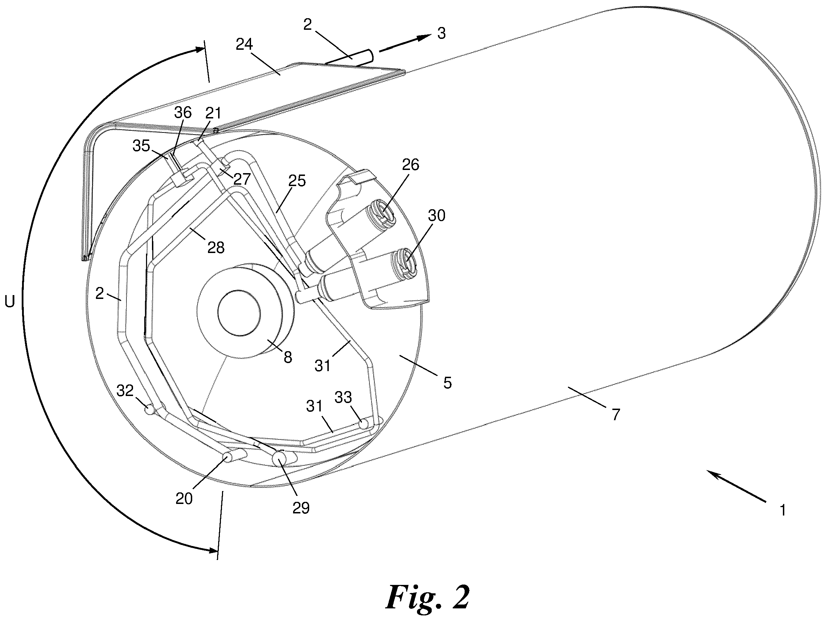

In den Fig. 1 und 2 ist ein Behälter (Tank) 1 für ein Kryofluid wie (hier:) verflüssigten Wasserstoff (Liquid Hydrogen, LH2) oder verflüssigtes Erdgas (Liquefied Natural Gas, LNG) gezeigt. Das Kryofluid liegt im Behälter 1 in der Regel in der Form eines Zweiphasengemischs aus Kryoflüssigkeit im unteren Bereich 1' und Kryogas im oberen Bereich 1" des Behälters 1 vor.

Das Kryofluid wird als Kryogas aus dem oberen Bereich 1" des Behälters 1 über eine Entnahmeleitung 2 entnommen und einem Verbraucher 3 (nicht gezeigt) zugeführt, z.B. einer Verbrennungskraftmaschine oder einer Brennstoffzelle. Wenn Kryoflüssigkeit oder zweiphasiges Kryofluid entnommen werden soll, könnte die Entnahmeleitung 2 im Behälter 1 auch von einem anderen Ort 4 als von dessen oberem Bereich 1" ausgehen.

Der Behälter 1 ist ein Doppelwand-Behälter mit einem Innenbehälter 5, der mit allseitigem Abstand - einmal abgesehen von der weiter unten beschriebenen Stützstruktur - unter Bildung eines Zwischenraums 6 in einem Außenbehälter 7 angeordnet ist. Der Zwischenraum 6 wird mit einem wärmeisolierenden Material gefüllt und/oder bevorzugt evakuiert, um den Innenbehälter 5 gegenüber dem Außenbehälter 7 thermisch zu isolieren.

Der Innenbehälter 5 und der Außenbehälter 7 haben jeweils etwa die Form eines langgestreckten Zylinders mit einer Zylinderachse A und sind koaxial zueinander angeordnet. Zur Halterung des Innenbehälters 5 mit allseitigem Abstand gegenüber der Außenbehälter 7 ist der Innenbehälter 5 über eine Stützstruktur aus z.B. endseitigen, thermisch isolierten Stützen 8 oder auf andere Weise im Außenbehälter 7 abgestützt. Die Stützen 8 können zusätzlich auch federnd ausgeführt sein.

Der Behälter 1 wird in seiner Einbaulage, z.B. an oder in einem Fahrzeug, optional stehend, in der Regel jedoch liegend, d.h. mit etwa horizontaler Achse A, wenn das Fahrzeug horizontal steht, betrieben.

Der Innenbehälter 5 ist aus einem etwa zylindrischen Mantel 9 und zwei diesen end- bzw. stirnseitig abschließenden Böden 10, 11 zusammengesetzt, beispielsweise an umlaufenden Schweißnähten 12, 13 verschweißt. Zumindest einer der Böden 10, 11 des Innenbehälters 5 (hier: beide Böden) kann ein sog. gewölbter Boden sein. Unter einem gewölbten Boden wird im Druckkesselbau jede Art von Boden mit nach außen konvexer Wölbung verstanden, wie ein elliptischer Boden, Klöpperboden, Korbbogenboden od.dgl.

Der Außenbehälter 7 ist ebenso aus einem etwa zylindrischen Mantel 14 und diesen end- bzw. stirnseitig abschließenden Böden 15, 16 zusammengesetzt, beispielsweise an umlaufenden Schweißnähten 17, 18 verschweißt. Zumindest einer der Böden 15, 16 (hier: der Boden 15) kann wieder ein gewölbter Boden sein oder - wie beispielhaft in den Fig. 1 und 2 gezeigt - ein sogenannter Diffuseurboden ("reverse-dished end"), der in einem Mittelabschnitt M nach innen gewölbt ist, d.h. von außen gesehen konkav ist. Ein zentraler Bereich Z des nach innen gewölbten Bereichs M kann optional - insbesondere bei Verwendung von axialen Stützen 8 zur Abstützung des Innenbehälters 5 - geringfügig nach außen gewölbt (konvex) sein, dies ist jedoch nicht zwingend.

Der Innenbehälter 5 ist aufgrund der gewölbten Böden 10, 11 für die Aufnahme von Kryofluid unter hohem Druck geeignet. Der Außenbehälter 7 braucht demgegenüber lediglich den Luftdruck der Umgebung gegenüber dem Vakuum des Zwischenraums 6 widerstehen zu können, wofür die Druckfestigkeit des hier beispielhaft dargestellten Diffuseurbodens 15 ausreicht.

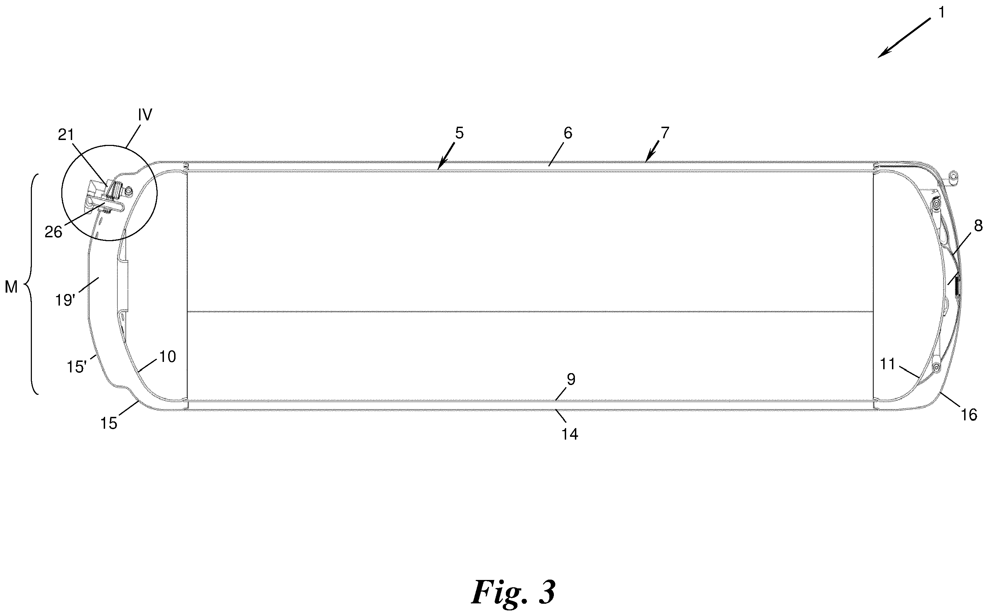

In dem Randbereich R, der radial außerhalb des einwärts gewölbten Bereichs M des Diffuseurbodens 15 liegt, ergibt sich zwischen dem Diffuseurboden 15 des Außenbehälters 7 und dem benachbarten gewölbten Boden 10 des Innenbehälters 5 eine ringförmige Erweiterung 19 des evakuiertem Zwischenraums 6 zwischen Innen- und Außenbehälter 5, 7, und zwar ohne die axiale Länge AL des Behälters 1 zu vergrößern. Die ringförmige Erweiterung 19 kann für im Vakuum liegende Leitungsführungen verwendet werden, wie anschließend beschrieben. Wenn solche Leitungsführungen nur an einem Ende des Behälters 1 erforderlich sind, kann beispielsweise der andere Boden 16 des Außenbehälters 7 - wie hier - als gewölbter Boden ausgeführt sein. Wie in Fig. 3 gezeigt, kann anstelle des Diffuseurbodens 15 ebenso **z.B.** ein gewölbter Boden vorgesehen sein, wobei bei ähnlicher Leitungsführung die axiale Länge AL des Behälters 1 geringfügig größer ist.

Fig. 3 zeigt eine solche abgewandelte Form des Behälters 1, bei welcher der Boden 15 des Außenbehälters 7 in seinem Mittelabschnitt M eine Ausbuchtung 15' nach außen und damit dort auch einen größeren Abstand zum benachbarten Boden 10 des Innenbehälters 5 hat. Damit ergibt sich im Mittelabschnitt M eine etwa kalottenförmige Erweiterung 19' des evakuierten Zwischenraums 6 zwischen Innen- und Außenbehälter 5, 7, welche für die im Vakuum liegenden Leitungsführungen verwendet werden kann, wie in den Fig. 1 und 2 und anschließend beschrieben.

Zurückkehrend auf die Fig. 1 und 2 ist darin eine beispielhafte Leitungsführung im Zwischenraum 6 bzw. den ringoder kalottenförmigen Erweiterungen 19, 19' gezeigt. Aufgrund der Ring- bzw. Kalottenform der Erweiterungen 19, 19' können darin Leitungen in Umfangsrichtung, **d.h.** jeweils über entsprechende Umfangsabschnitte U (Fig. 1) der Ring- bzw. Kalottenform, geführt werden. In den Fig. 1 und 2 ist die Leitungsführung im Zwischenraum 6 lediglich grob schematisch und in Fig. 3 nur ausschnittsweise gezeigt.

Die Erweiterungen 19, 19' können z.B. für einen als Wärmesiphon dienenden aufsteigenden Abschnitt der Entnahmeleitung 2 herangezogen werden. Die Entnahmeleitung 2 durchsetzt dazu die Wandung des Innenbehälters 5, hier den gewölbten Boden 10, an einem Durchtritt 20 im unteren Bereich 1', läuft dann über einen Abschnitt U (hier: etwa die Hälfte) des Umfangs der Ring- bzw. Kalottenform der Erweiterung 19 bzw. 19' in dieser nach oben und durchsetzt schließlich die Wandung des Außenbehälters 7 an einem Durchtritt 21 an dessen Oberseite. Der Durchtritt 21 kann beispielsweise in der Ausbuchtung 15' (Fig. 3) oder im Bord 22 (Fig. 1) des Bodens 15 oder in einem daran angrenzenden Abschnitt 23 des Mantels 14 des Außenbehälters 7 liegen.

Die Entnahmeleitung 2 wird unmittelbar nach ihrem Durchtritt 21 durch eine Heizeinrichtung 24, z.B. einen Wärmetauscher, hindurchgeführt, die bzw. der auf der Oberseite des Außenbehälters 7 angebracht ist. Dadurch wird die aus dem Behälter 1 austretende Entnahmeleitung 2 sofort von der Heizeinrichtung 24 abgedeckt und ist nicht gegenüber der Außenluft exponiert.

Der als Wärmesiphon dienende, über die Erweiterung 19 bzw. 19' geführte Teil der Entnahmeleitung 2 ist durch das dort herrschende Vakuum wärmeisoliert. Wenn die Entnahmeleitung 2 im Innenbehälter 5 an einem Ort 4 etwa diametral zum Durchtritt 20 endet, ergibt sich in der Einbaulage des Behälters 1 (liegende Achse A) vom Ort 4 über den Durchtritt 20 bis hin zum Durchtritt 21 ein etwa U-förmiger Wärmesiphon in der Entnahmeleitung 2.

Der Zwischenraum 6 bzw. die Erweiterung 19 bzw. 19' des Zwischenraums 6 kann auch für die Führung weiterer Leitungen und die Beherbergung von Anschlüssen verwendet werden. Beispielsweise kann eine Füllleitung 25 zum Befüllen des Innenbehälters 5 von einem Füllanschluss 26 in der Wandung des Außenbehälters 7 über einen Umfangsabschnitt der Erweiterungen 19, 19' geführt werden. Wie gezeigt kann die Füllleitung 25 über ein T-Stück 27 gleich direkt in die Entnahmeleitung 2 einmünden, oder sie kann gesondert in den Innenbehälter 5 einmünden.

Zum Erleichtern des Füllvorganges kann ferner eine Entgasungsleitung ("Ventleitung") 28 vorgesehen werden, die vom Kopfbereich 1" des Innenbehälters 5 ausgeht und durch einen Durchtritt 29 durch die Wandung des Innenbehälters 5, hier den Boden 10, hindurch und über einen Umfangsabschnitt der Erweiterung 19 bis zu einem Entgasungsanschluss 30 in der Wandung des Außenbehälters 7 geführt ist. Sowohl der Entgasungsanschluss 30 als auch der Füllanschluss 26 können im Boden 15, insbesondere in der Ausbuchtung 15' (Fig. 3), im Bord 22 (Fig. 1) oder im Anschlussbereich 23 des Mantels 14 des Außenbehälters 7 angeordnet sein.

Des Weiteren ist eine optionale Heizleitung 31 gezeigt, die über Durchtritte 32, 33 in der Wandung des Innenbehälters 5, hier des Bodens 10, in den Innenbehälter 5 ein- und austritt und im Bodenbereich 1 des Innenbehälters 5 eine Heizschlange 34 bildet. Die Heizleitung 31 kann ein elektrischer Widerstandsdraht oder eine Fluidleitung für ein Wärmemedium sein und z.B. eine Vorlaufleitung 31' und eine Rücklaufleitung 31" umfassen. Als Wärmemedium kann z.B. bereits in der Heizeinrichtung 24 erwärmtes Kryofluid oder das - im Vergleich zum Kryofluid wesentlich wärmere - Kühlmittel einer als Verbraucher 3 eingesetzten Verbrennungskraftmaschine verwendet werden.

Die Heizleitung 31 verläuft außerhalb des Innenbehälters 5 über entsprechende Umfangsabschnitte der ringförmigen Erweiterung 19 bis hin zu Durchtritten 35, 36 in der Wandung des Außenbehälters 7. Von dort kann die Heizleitung 31 beispielsweise mit demselben Wärmemedium, z.B. dem erwärmten Kryofluid, gespeist werden, mit dem auch die Heizeinrichtung 24 betrieben werden kann.

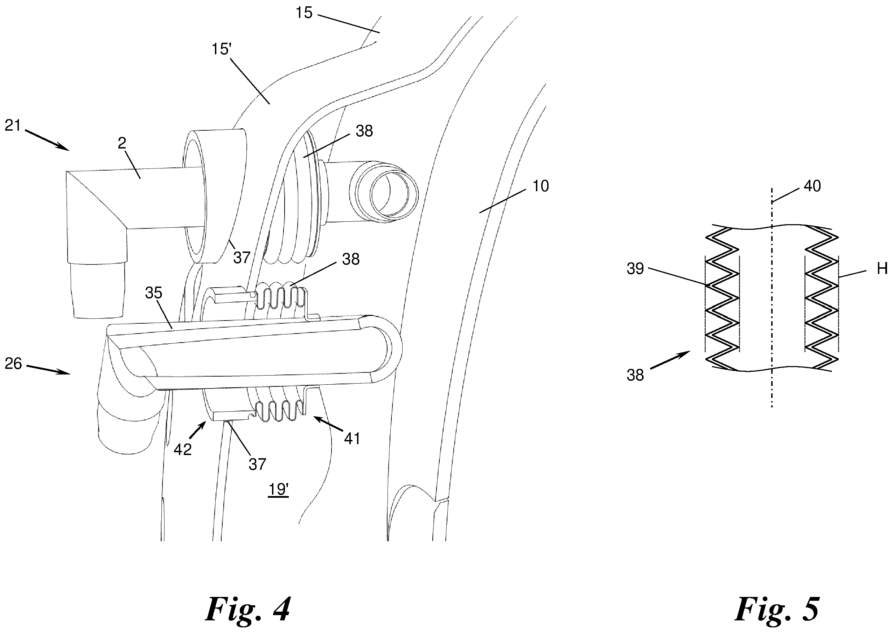

Fig. 4 zeigt die Ausgestaltung des Durchtritts zumindest einer der Leitungen Entnahmeleitung 2, Füllleitung 25, Entgasungsleitung 28, Heizleitungen 31, 31', 31", einer Hohlleitung **38 z.B.** als Kabelschacht für Druck-, Temperatur- und/oder Füllstandsensoren (nicht gezeigt) im Innenbehälter 5, od.dgl. durch die Wandung des Außenbehälters 7 im Detail. Beispielsweise können die in den Fig. 1 bis 3 gezeigten Durchtritte 21, 35, 36 und Füll- und Entgasungsanschlüsse 26, 30 in dieser Art und Weise gestaltet sein. In Fig. 4 ist dies stellvertretend für den Durchtritt 21 der Entnahmeleitung 2 und den Füllanschluss 26 der Füllleitung 25 gezeigt. Es versteht sich jedoch, dass jede beliebige Anzahl und insbesondere alle der im Zwischenraum 6 geführten Leitungen 2, 25, 28, 31, 31', 31", 38 usw., im Weiteren stellvertretend mit dem Bezugszeichen L bezeichnet, in der in Fig. 4 gezeigten Weise die Wandung des Außenbehälters 7 durchsetzen können.

Gemäß Fig. 4 hat die Wandung des Außenbehälters 7 am Ort des Durchtritts der jeweiligen Leitung L eine Öffnung 37, deren lichte Weite größer als der Außendurchmesser der dort die Wandung des Außenbehälters 7 durchsetzenden Leitung L ist. Die Leitung L tritt etwa mittig durch die Öffnung 37 hindurch und ist über eine Faltenbalgmanschette 38 in der Öffnung 37 vakuumdicht montiert. Ein ausschnittsweiser Längsschnitt durch die Faltenbalgmanschette 38 ist in Fig. 5 gezeigt: die Wandung 39 der Faltenbalgmanschette 38 hat in einem Längsschnitt gesehen einen zickzack-, schlangenlinien- oder meanderförmigen Verlauf. Die Faltenbalgmanschette 38 ist in der Regel aus Metall, insbesondere Edelstahl oder Aluminium, gefertigt und ihre Falten können darin z.B. durch Rollen, Walzen, Prägen, Stauchen usw. hergestellt werden.

Die in den Fig. 4 und 5 gezeigte Faltenbalgmanschette 38 ist etwa rohrförmig. Ihre Längsachse 40 verläuft etwa in derselben Richtung, in der die Leitung L durch die Wandung des Außenbehälters 7 hindurchtritt, also etwa koaxial zur Leitung L im Bereich des Durchtritts. Die Faltenbalgmanschette 38 hat - soweit es die "Hüllkurve" bzw. "Hüllform" H ihrer Faltenbalggestaltung betrifft - eine lichte Weite, die in ihrem rohrförmigen Abschnitt größer ist als der Außendurchmesser der Leitung L und so die Leitung L mit Abstand umgibt. Die Faltenbalgmanschette 38 ist an ihrem einen Ende 41 verengt, und das verengte Ende 41 ist vakuumdicht mit dem Außenumfang der dort in die Faltenbalgmanschette eintretenden Leitung L verbunden. Das gegenüberliegende Ende 42 der Faltenbalgmanschette 38 ist vakuumdicht mit dem Rand der Öffnung 37 des Außenbehälters 7 verbunden. Die vakuumdichten Verbindungen der Enden 41, 42 der Faltenbalgmanschette 38 mit einerseits der Leitung L und anderseits dem Außenbehälter 7 können beispielsweise durch Verschweißen, Verpressen, Verschrauben, Verkleben usw. hergestellt werden.

Wie in Fig. 4 gezeigt, kann die Faltenbalgmanschette 38 z.B. vom Boden 15 des Außenbehälters 7 nach innen in den Zwischenraum 6 ragen. Wenn der Boden 15 eine Ausbuchtung 15' hat, kann eine besonders lange Faltenbalgmanschette 38 verwendet werden, die eine entsprechend bessere thermische Entkopplung zwischen Leitung L und Außenbehälter 7 bereitstellt.

In einer nicht beanspruchten Ausführungsform könnte anstelle einer rohrförmigen Faltenbalgmanschette 38 z.B. eine ringscheibenförmige Faltenbalgmanschette verwendet werden, deren Falten also in Form von konzentrischen Kreisen rund um die Leitung L von deren Außenumfang bis zum Rand der Öffnung 37 verlaufen. Auch beliebige Zwischenformen zwischen einer rohrförmigen und einer ringscheibenförmigen Faltenbalgmanschette 38 sind möglich, aber nicht beansprucht.

Die Erfindung ist nicht auf die dargestellten Ausführungsformen beschränkt, sondern umfasst alle Varianten, Modifikationen und deren Kombination, die in den Rahmen der angeschlossenen Ansprüche fallen.

## Patentansprüche

1. Behälter zur Aufnahme eines Kryofluids, insbesondere kryogenen Wasserstoffs, mit einem Außenbehälter (7) und einem darin über eine Stützstruktur (8) beabstandet angeordneten Innenbehälter (5), wobei der Zwischenraum (6) zwischen Außen- und Innenbehälter zwecks Wärmeisolierung evakuierbar ist, und wobei zumindest eine mit dem Innenbehälter (5) in Verbindung stehende Leitung (L) die Wandung des Außenbehälters (7) durchsetzt, wobei die Wandung des Außenbehälters (7) eine Öffnung hat, deren lichte Weite größer als der Außendurchmesser der Leitung (L) ist und die von der Leitung (L) durchsetzt ist, wobei die Leitung (L) über eine Faltenbalgmanschette (38) in der Öffnung (37) vakuumdicht montiert ist, wobei die Faltenbalgmanschette (38) etwa rohrförmig ist, die Leitung (L) mit Abstand umgibt und an einem Ende (41) verengt ist, und wobei das verengte Ende (41) vakuumdicht mit einem Außenumfang der Leitung (L) und das gegenüberliegende Ende (42) vakuumdicht mit dem Rand der Öffnung (37) verbunden ist, wobei Innenund Außenbehälter (5, 7) jeweils einen zylinderförmigen Mantel (9, 14) mit diesen beidseitig verschließenden Böden (10, 11, 15, 16) haben, wobei die Öffnung (37) in einem Boden (15) des Außenbehälters (7) liegt, **dadurch gekennzeichnet, dass** die Faltenbalgmanschette (38) in den Zwischenraum (6, 19, 19') zwischen diesem Boden (15) und dem benachbarten Boden (10) des Innenbehälters (5) ragt.

2. Behälter nach Anspruch 1, **dadurch gekennzeichnet, dass** der Boden (15) des Außenbehälters (7) im Bereich der Öffnung (37) eine Ausbuchtung (15') nach außen hat.

3. Behälter nach Anspruch 1 oder 2, **dadurch gekennzeichnet, dass** die Faltenbalgmanschette (38) aus Metall gefertigt ist, bevorzugt aus Edelstahl oder Aluminium.

## Claims

1. A container for receiving a cryogenic fluid, in particular cryogenic hydrogen, having an outer container (7) and an inner container (5) which is arranged at a distance inside the outer container via a supporting structure (8), wherein the intermediate space (6) between the outer and inner containers can be evacuated for thermal insulation purposes, and wherein at least one line (L) in communication with the inner container (5) passes through the wall of the outer container (7), wherein the wall of the outer container (7) has an opening, the clearance of which is greater than the outer diameter of the line (L) and through which the line (L) passes, wherein the line (L) is mounted in a vacuum-tight manner via a bellows sleeve (38) in the opening (37), wherein the bellows sleeve (38) is approximately tubular, surrounds the line (L) with spacing and is narrowed at one end (41), and wherein the narrowed end (41) is connected in a vacuum-tight manner to an outer circumference of the line (L) and the opposite end (42) is connected in a vacuum-tight manner to the edge of the opening (37), wherein the inner and outer containers (5, 7) each have a cylindrical jacket (9, 14) with caps (10, 11, 15, 16) closing the jacket on both sides, wherein the opening (37) is located in a cap (15) of the outer container (7), **characterized in that** the bellows sleeve (38) projects into the intermediate space (6, 19, 19') between this cap (15) and the adjacent cap (10) of the inner container (5).

2. The container according to claim 1, **characterized in that** the cap (15) of the outer container (7) has a bulge (15') to the outside in the area of the opening (37).

3. The container according to claim 1 or 2, **characterized in that** the bellows sleeve (38) is made of metal, preferably of stainless steel or aluminium.

## Revendications

1. Récipient pour la réception d'un fluide cryogénique, en particulier de l'hydrogène cryogénique, ayant un récipient extérieur (7) et un récipient intérieur (5) disposé à distance dans le récipient extérieur par le biais d'une structure de support (8), où l'espace intermédiaire (6) entre les récipients extérieur et intérieur peut être évacué à des fins d'isolation thermique, et où au moins une conduite (L) en communication avec le récipient intérieur (5) passe à travers la paroi du récipient extérieur (7), où la paroi du récipient extérieur (7) a une ouverture dont la largeur intérieure est supérieure au diamètre extérieur de la conduite (L) et à travers laquelle la conduite (L) passe, où la conduite (L) est montée de manière étanche au vide par le biais d'un manchon à soufflet (38) dans l'ouverture (37), où le manchon à soufflet (38) est approximativement tubulaire, entoure la conduite (L) avec espacement et est rétréci au à une extrémité (41), et où l'extrémité rétrécie (41) est connectée de manière étanche au vide à une circonférence extérieure de la conduite (L) et l'extrémité opposée (42) est connectée de manière étanche au vide au bord de l'ouverture (37), où les récipients intérieur et extérieur (5, 7) ont chacun une enveloppe cylindrique (9, 14) avec des fonds (10, 11, 15, 16) fermant l'enveloppe des deux côtés, où l'ouverture (37) est située dans un fond (15) du récipient extérieur (7), **caractérisé en ce que** le manchon à soufflet (38) s'étend dans l'espace intermédiaire (6, 19, 19') entre ce fond (15) et le fond (10) adjacent du récipient intérieur (5).

2. Récipient selon la revendication 1, **caractérisé en ce que** le fond (15) du récipient extérieur (7) a un bombement (15') vers l'extérieur dans la zone de l'ouverture (37).

3. Récipient selon la revendication 1 ou 2, **caractérisé en ce que** le manchon à soufflet (38) est fabriqué en métal, de préférence en acier inoxydable ou en aluminium.
